# EUROPÄISCHE PATENTSCHRIFT

(11) **EP 1 410 205 B1**
(45) Veröffentlichungstag und Bekanntmachung des Hinweises auf die Patenterteilung: **31.03.2010**
(21) Anmeldenummer: 00974366.7
(22) Anmeldetag: 06.09.2000
(51) Int. Cl.: G06F 11/00

(54) **VERFAHREN BZW.VORRICHTUNG ZUR ÜBERWACHUNG UND STEUERUNG DES BETRIEBSVERHALTENS EINES COMPUTER- ODER PROZESSORSYSTEMS**
METHOD AND DEVICE FOR MONITORING AND CONTROLLING THE OPERATIONAL PERFORMANCE OF A COMPUTER SYSTEM OR PROCESSOR SYSTEM
PROCEDE ET DISPOSITIF POUR CONTROLER ET COMMANDER LE COMPORTEMENT EN SERVICE D'UN SYSTEME D'ORDINATEUR OU DE PROCESSEUR

(30) Priorität: 06.09.1999 DE 19942430
(43) Veröffentlichungstag der Anmeldung: 21.04.2004
(73) Patentinhaber: Sperling, Axel, 81927 München (DE); Planki, Peter, 80336 München (DE); Lettmair, Karl-Heinz, 86932 Stoffen (DE); Kruth, Dieter, 81927 München (DE)
(72) Erfinder: PLANKI, Peter, 80336 München (DE); LETTMAIR, Karl-Heinz, 86932 Stoffen (DE)
(74) Vertreter: Jordan, Volker Otto Wilhelm
(86) Internationale Anmeldenummer: PCT/EP2000/008704
(87) Internationale Veröffentlichungsnummer: WO 2001/018632

(56) Entgegenhaltungen:
- EP-A- 0 352 340
- WO-A-92/10032
- US-A- 5 878 377

## Beschreibung

Die vorliegende Erfindung betrifft ein Verfahren zur automatisierten Überwachung und Steuerung des Betriebsverhaltens eines Prozessorsystems bzw. eine Vorrichtung zum Durchführen dieses Verfahrens.

Die Betriebsfähigkeit und Betriebssicherheit von Bauelementen, Baukomponenten, Baugruppen, Devices und damit eines Computer- oder Prozessorsystems insgesamt ist lediglich innerhalb bestimmter Toleranzbereiche physikalischer Größen in ihrer Betriebsumgebung gesichert. Zu diesen physikalischen Größen zählt insbesondere die Temperatur, allerdings auch die Luftfeuchtigkeit, der Luftdurchsatz, die Staub- oder Erschütterungsfreiheit. Je nach Art und Anwendungsgebiet des zu überwachenden Systems können auch Helligkeitsschwankungen, chemische Verunreinigungen oder andere Größen von Bedeutung sein. Befinden sich eine oder mehrere dieser Größen außerhalb der vorgegebenen Toleranzbereiche, so kann dies zu einer Beeinträchtigung der Leistungsfähigkeit der betroffenen Komponente aber auch zu deren Totalausfall führen. Im schlimmsten Fall kann dabei der Ausfall einer einzelnen Komponente einen Zusammenbruch des Gesamtsystems zur Folge haben.

Insbesondere bei größeren Computersystemen, wie z. B. bei Großrechenanlagen oder Mulitprozessorsystemen, ist ein kontinuierlicher und störungsfreier Betrieb von großer Bedeutung. Dies deshalb, da auf derartigen Anlagen Berechnungen teilweise über einen sehr langen Zeitraum laufen, so daß ein Ausfall des Systems zu einem bestimmten Zeitpunkt möglicherweise die Arbeit mehrere Tage zunichte macht. Aus diesem Grund sind Temperatur-Überwachungsvorrichtungen bekannt, welche die Temperatur an einzelnen Komponenten des Systems messen und bei Feststellen einer unzulässig erhöhten Temperatur die betroffene Komponente beispielsweise abschalten, oder - falls es sich um einen Prozessor handelt - durch eine Reduzierung der Taktfrequenz eine Leistungsminderung bewirken. In besonders kritischen Fällen wird eine kontrollierte Abschaltung des Gesamtsystems durchgeführt.

Die derzeit bekannten Überwachungsvorrichtungen haben vorrangig zum Ziel, einen plötzlichen Zusammenbruch des Gesamtsystems durch das vorherige Abschalten einzelner Komponenten oder das gezielte Herunterfahren des Systems zu verhindern. Hierdurch kann zwar der Verlust von Daten vermieden werden, allerdings führt dies häufig zu einer drastischen Reduzierung der Leistungsfähigkeit des Gesamtsystems, die in diesem Ausmaß oftmals gar nicht nötig wäre.

Aus der EP 0 352 340 A1 ist ein Verfahren und eine Vorrichtung zur Überwachung der Betriebsumgebung eines Computersystems bekannt. Um ein Computersystem angeordnete Sensoren erfassten Umgebungsparameter des Computersystems, die gespeichert und mit vorgegebenen Umgebungsparametern verglichen werden. Durch Grenzwertüberschreitung indizierte Störzustände führen dazu, dass Alarme an Bedienpersonal gegeben werden.

Aus der WO92/10032 ist ein temperaturerfassendes Steuersystem und ein entsprechendes Steuerverfahren für integrierte Schaltungen bekannt. Es wird ein temperaturbezogener Parameter der integrierten Schaltung erfasst und eine Änderungsrate der Temperatur der integrierten Schaltung bestimmt. Dann, wenn die Änderungsrate indiziert, dass die integrierte Schaltung eine vorbestimmte Schwellentemperatur überschreiten wird, werden der integrierten Schaltung für eine vorgegebene Anzahl von Systemzyklen Leerlauf-Instruktionen (NOOP Instructions) zugeführt, um zu ermöglichen, dass die integrierte Schaltung auf eine akzeptable Temperatur abkühlt. Wenn die Änderungsrate der Temperatur indiziert, dass die integrierte Schaltung eine Temperatur höher als ein zweiter Schwellenwert erreichen wird, wird die Häufigkeit der Leerlauf-Instruktionen vergrößert oder die integrierte Schaltung ausgeschaltet.

Die US 5,878,377 offenbart ein Verfahren und eine Vorrichtung zur Erzeugung von Umgebungs- und Energieversorgungswarnungen, um diese Information Computerwartungspersonal für eine schnelle und genaue Diagnose und Korrektur von Umgebungs- und Energieversorgungsfehlern zu liefern.

Es ist daher Aufgabe der vorliegenden Erfindung, eine Möglichkeit zur Überwachung und Steuerung des Betriebsverhaltens eines Computer- oder Prozessorsystems anzugeben, bei der der Einfluß einer Störung auf die Betriebsfähigkeit des überwachten Systems abgemildert wird und dessen Betriebsfähigkeit bei beherrschbaren Störfälle erhalten oder verlängert wird. Die aktiven Berechnungsprozesse sowie deren Datenbestände und Ergebnisse sollen in einem größtmöglichen Ausmaß geschützt werden.

Die Aufgabe wird durch ein Verfahren gemäß Anspruch 1 bzw. durch eine Vorrichtung gemäß Anspruch 4 gelöst.

Erfindungsgemäß wird somit abhängig von Art und intensität einer in dem zu überwachenden System auftretenden Störung eine Reaktion ausgelöst, durch welche Beschädigungen an Bauelementen, Baukomponenten, Baugruppen, Devices und damit dem Prozessorsystem insgesamt vermieden werden, die bei einer uneingeschränkten Fortsetzung des Betriebs auftreten würden. Bewegen sich die Parameter außerhalb tolerierbarer Grenzwerte kann eine kontrollierte Abschaltung des Gesamtsystems veranlaßt werden. Darüber hinaus ist die Möglichkeit gegeben, einzelne Komponenten oder auch das Gesamtsystem wieder zu reaktivieren bzw. hochzufahren, wenn die Störung beseitigt oder zumindest gemindert wurde.

Gegenüber den herkömmlichen Lösungen zur Überwachung von Prozessorsystemen stellt das erfindungsgemäße Verfahren die Fortsetzung der Betriebsfähigkeit des Systems bei höchstmöglicher Effizienz und gleichzeitigem Schutz der aktiven Verarbeitungsprozesse sicher. Dies deshalb, da die einzelnen Elemente unabhängig voneinander durch Meßsensoren überwacht werden und bei Erreichen vorgegebener Grenzwerte nicht zwangsläufig eine vollständige Abschaltung des Gesamtsystems und damit einer Unterbrechung der gerade laufenden Programme durchgeführt wird. Vielmehr werden, falls dies vertretbar ist, die einzelnen Bauelemente, Baukomponenten, Baugruppen oder Devices einzeln abgeschaltet oder in ihrer Leistung gemindert, wobei das System insgesamt jedoch weiterhin betriebsfähig bleibt. Dabei ermöglichen die vorgegebenen Reaktionsmuster eine Störfall-adequate Reaktion sowie eine spezifische Überwachung und Ansteuerung der einzelnen Bauelemente.

Ein Vorteil der vorliegenden Erfindung ist auch darin zu sehen, daß im Gegensatz zu den bisher bekannten Überwachungseinrichtungen über eine reine Temperaturüberwachung hinaus eine umfassende Überwachung potentieller Störeinflüsse innerhalb aber auch außerhalb des Prozessorsystems ermöglicht wird. So kann z.B. der störende Einfluß von zu hoher Luftfeuchtigkeit, zu geringem Luftdurchsatz, von Staub oder Erschütterungen ebenfalls erkannt und berücksichtigt werden. Ferner kann das erfindungsgemäße Verfahren bus- und damit herstellerunabhängig bei sämtlichen Systemen eingesetzt werden, wodurch ein Höchstmaß an Flexibilität gewährleistet ist. Die gilt sowohl für neu zu produzierende wie auch für bereits existierende Computer- oder Prozessorsysteme.

Gemäß einer Weiterbildung der Erfindung handelt es sich bei den erfaßten Betriebsparametern oder Umgebungsparametern nicht nur um absolut gemessene physikalische Größen, sondern auch um die zeitliche Veränderung dieser Meßgrößen. Hierdurch ist die Möglichkeit gegeben, den Einfluß einzelner Störfaktoren gezielter zu erkennen und geeignete Gegenmaßnahmen zu treffen. So hat beispielsweise ein sehr schneller Temperaturanstieg einer überwachten Baukomponente eine andere Reaktion zur Folge als ein lediglich moderater Anstieg. Darüber hinaus kann vorgesehen sein, daß neben der Übertragung des der ausgewählten Reaktion entsprechenden Steuerbefehls auch ein entsprechendes Informationssignal in optischer oder akustischer Form ausgegeben wird, um einem Wartungspersonal möglichst umgehend den Ort und die Ursache der Störung mitteilen zu können. Dieses Informationssignal kann auch in der Übertragung einer SMS-Nachricht bestehen.

In einer Weiterbildung kann die erfindungsgemäße Vorrichtung eine akustische oder optische Ausgabevorrichtung zur Ausgabe einer der Betriebsereignis-Meldung und/oder dem übermittelte Steuerbefehl entsprechenden Nachricht aufweisen. Ferner kann eine Sendevorrichtung zur Übermittlung dieser Nachricht, beispielsweise in Form eine SMS-Nachricht, vorgesehen sein. Die unabhängiger Überwachung des Systems wird dadurch gewährleistet, daß die Überwachungsvorrichtung Bestandteil eines von dem zu überwachenden System separaten Computers ist.

Im Folgenden soll die Erfindung anhand der beiliegenden Zeichnung näher erläutert werden. Es zeigen:
Fig. 1 eine erfindungs gemäße Vorrichtung zur Überwachung eines Computersystems in schematischer Darstellung; und
Fig. 2 bis 4 verschiedene Beispiele zur Erläuterung der Reaktion auf den Temperaturanstieg einer überwachten Komponente.

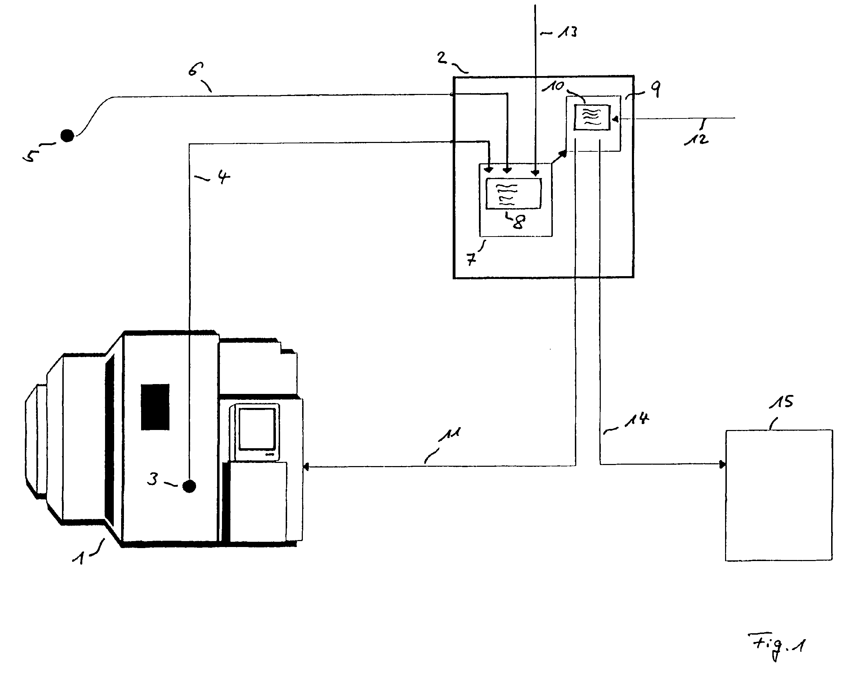

Fig. 1 zeigt die Überwachung eines Großrechners 1 durch eine erfindungsgemäße Überwachungsvorrichtung 2. Dabei sind innerhalb des Großrechners 1 mehrere erste Sensoren 3 angeordnet, welche die Betriebsparameter von einzelnen Komponenten oder Baugruppen des Großrechners 1 erfassen und die Daten über entsprechende Leitungen 4 an die Überwachungsvorrichtung 2 übermitteln. Bei diesen ersten Sensoren 3 handelt es sich z.B. um Temperatursensoren aber beispielsweise auch um Sensoren zum Erfassen von Netzspannungsschwankungen, Erschütterungen oder anderen für den Betrieb relevanten Größen. Neben den ersten Sensoren sind ferner zweite Sensoren zum Erfassen von Parametern in der Umgebung des Großrechners 1 vorgesehen, beispielsweise Sensoren zum Erfassen von chemischen Verunreinigungen der Luft, von Staub oder Rauch, Luftfeuchtigkeit oder in gewissen Fällen auch von ionisierender Strahlung. Insbesondere kann es sich wiederum um Temperatursensoren handeln. Die von diesen zweiten Sensoren erfaßten Messwerte werden über entsprechende Leitungen 6 ebenfalls an die Überwachungsvorrichtung 2 übertragen.

Die von den ersten und zweiten Sensoren 3 bzw. 5 erfaßten Betriebs- und Umgebungsparameter werden zunächst in einer Überwachungseinheit 7 der Überwachungsvorrichtung 2 verarbeitet, wobei die erfaßten Werte mit Grenzwerten verglichen werden, die in einem ersten Speicher 8 aufgelistet sind. Dabei ist nicht notwendigerweise für jede überwachte Größe nur ein einziger Grenzwert vorgesehen. Vielmehr sind vorzugsweise mehrere Grenzwerte, ein unterer, ein mittlerer sowie ein oberer Grenzwert vorgesehen, so daß auf das Auftreten einer Störung spezifisch reagiert werden kann. Beispielsweise ist bei Überschreiten des unteren Grenzwertes nur eine geringfügige Änderung des Betriebsverhaltens des Computersystems notwendig, während das Überschreiten des oberen Grenzwertes zu einer Stillegung der betroffenen Komponente oder möglicherweise sogar des Gesamtsystems führt.

Werden ein oder mehrere der in dem ersten Speicher 8 abgelegten Grenzwerte über- oder unterschritten, so wird dies von der Überwachungseinheit 7 erkannt und eine entsprechende Betriebsereignis-Meldung auf Grundlage des Über- oder Unterschreitens der Grenzwerte erzeugt, welche an eine Steuereinheit 9 übertragen wird. Diese Betriebsereignis-Meldung gibt über Art und Umfang der Störung Auskunft. Die Steuereinheit 9 wählt im folgenden aus einer Anzahl von vorgegebenen Reaktionsmustern, welche in einem zweiten Speicher 10 enthalten sind, einen der Betriebsereignis-Meldung entsprechenden Steuerbefehl aus und übermittelt diesen über die Datenleitung 11 an den Großrechner 1. Dieser Steuerbefehl enthält Anweisungen zur Änderung des Betriebsverhaltens und kann beispielsweise in der Anweisung bestehen, einzelne Komponenten stillzulegen bzw. in einen Sleep-Modus zu versetzen oder die Systemleistung zu drosseln. Darüber hinaus kann auch der Befehl zu einer Gesamtabschaltung des Systems übertragen werden. Die Reakionsmuster sind dabei so gewählt, daß der Großrechner 1 und die auf ihm laufenden Programme unter den durch die Reaktionsmuster neu vorgegebenen Betriebsbedingungen nach wie vor weiterlaufen können, falls dies vertretbar ist.

Wurde der Einfluß der Störung erfolgreich beseitigt oder zumindest abgemindert, so kann ein von der Überwachungsvorrichtung 2 an den Großrechner 11 übermittelter Steuerbefehl allerdings auch daran bestehen, das System wieder hochzufahren bzw. zuvor stillgelegte Komponenten wieder zu reaktivieren. Wurde von der Überwachungseinheit eine Betriebsereignis-Meldung erzeugt oder von der Steuereinheit ein Steuerbefehl übertragen, so kann gleichzeitig auch über eine zweite Ausgabeleitung 14 ein entsprechendes Informationssignal an eine Sendevorrichtung 15 übermittelt werden. Mit Hilfe dieser Sendevorrichtung 15 können dann beispielsweise dem Wartungspersonal entsprechende SMS-Nachrichten übermittelt werden. Alternativ dazu besteht auch die Möglichkeit, anstelle einer Sendevorrichtung eine optische oder akustische Ausgabevorrichtung zu verwenden.

Vorzugsweise ist die gesamte Überwachungsvorrichtung 2 Bestandteil eines von dem überwachten Großrechner 1 separaten Computers. Die Flexibilität der erfindungsgemäßen Vorrichtung ist dadurch gewährleistet, daß über Eingabeleitungen 12 und 13 neue Grenzwerte bzw. neue Reaktionsmuster in die beiden Speicher 8 und 10 eingeschrieben werden können. Dadurch ist die Möglichkeit gegeben, jederzeit auf Veränderungen in der Konfiguration des zu überwachenden Systems zu reagieren. Ferner besteht durch die Möglichkeit, nicht nur das Verhalten einzelner Betriebs- oder Umgebungsparameter isoliert zu betrachten, sondern diese in Kombination zu bewerten und entsprechend zu reagieren. Beispielsweise muß ein leichter Temperaturanstieg einer überwachten Komponente nicht notwendigerweise in einer Abschaltung dieser Komponente enden, wenn ein benachbartes Bauelement eine deutlich erhöhte Temperatur aufweist, da die Ursache für den Temperaturanstieg der ersten Komponente höchstwahrscheinlich in der starken Überhitzung des benachbarten Bauelements zu finden ist. In diesem Fall ist es zunächst ausreichend, lediglich das stark überhitzte Bauelement stillzulegen..

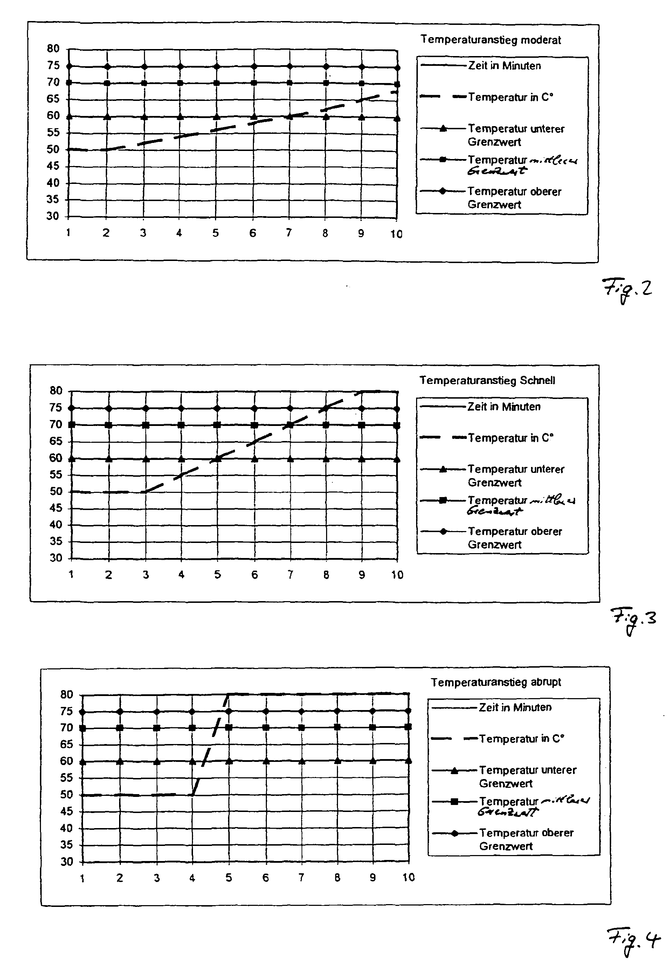

Am Beispiel der Temperaturüberwachung soll nachfolgend exemplarisch die Funktionsweise des erfindungsgemäßen Verfahrens beschrieben werden. Insbesondere die Temperaturüberwachung der einzelnen Baukomponenten gewinnt zunehmend an Bedeutung, weil durch die marktgetriebene und entwicklungsbedingte Leistungssteigerung und eine erhöhte Packungsdichte der Bauelemente zunehmend Probleme bei der Beherrschung der Temperaturen auftreten. Die Figuren 2 bis 4 zeigen dabei den Verlauf der Temperatur eines zu überwachenden Elements, beispielsweise eines Prozessors. Dabei werden im vorliegenden Beispiel drei verschiedene Grenzwerte, ein unterer, ein mittlerer und ein oberer Grenzwert definiert, deren Über- und Unterschreiten unterschiedliche Reaktionen hervorruft. Darüber hinaus wird bei dem in den Figuren 2 bis 4 dargestellten Beispiel nicht nur der Absolutwert der Temperatur sondern auch deren zeitlicher Verlauf berücksichtigt.

In Fig. 2 beispielsweise wird während des überwachten Zeitraums ein moderater Temperaturanstieg festgestellt, in dessen Verlauf lediglich der untere Grenzwert überschritten wird. Aufgrund des nur langsamen Temperaturanstiegs wird bei dem Überschreiten des unteren Grenzwerts zunächst die Leistung des überwachten Prozessors reduziert, beispielsweise durch eine Herabsetzung der Taktrate. Alternativ dazu kann allerdings auch die Leistung eines entsprechenden Kühlaggregats erhöht werden. Führen diese Maßnahmen zum Erfolg, kann das System bis zum Eintreffen des Wartungspersonales, welches durch die gleichzeitig mit dem entsprechenden Steuerbefehl übermittelte Nachricht informiert wurde, in diesem Modus weiterbetrieben werden. Eine Abschaltung der Komponente oder des Gesamtsystems ist in diesem Fall nicht notwendig.

Bei einem schnelleren Temperaturanstieg, wie er beispielsweise in Fig. 3 dargestellt ist, führen die zuvor beschriebenen Maßnahmen nicht zum Erfolg und im Laufe der Zeit werden auch die beiden weiteren Grenzwerte überschritten. Spätestens beim Überschreiten des oberen Grenzwertes ist ein Abschalten des überwachten Prozessors notwendig. Verringert sich infolge dessen die Temperatur wieder unter die vorgegebenen Grenzwerte, so kann das Gesamtsystem bei abgeschaltetem Prozessor bis zum Eintreffen des Wartungspersonals weiterbetrieben werden. Führt allerdings auch das Abschalten des Prozessors nicht zu einer Temperaturverringerung - beispielsweise innerhalb einer vorgegebenen Zeitspanne - so ist es sicherer, daß das Gesamtsystem mittels Shutdown-Prozedur herunterzufahren, um zumindest die bereits existierenden und bestehenden Daten zu sichern.

Ein abrupter Temperaturanstieg, wie er in Fig. 4 dargestellt ist, weist hingegen auf einen außerordentlichen Störfall hin, der in jedem Fall eine sofortige Abschaltung des Gesamtsystems zur Folge hat. Dabei wird aufgrund des starken Temperaturanstiegs nicht das Überschreiten weiterer Grenzwerte abgewartet sondern die Abschaltung sofort eingeleitet.

Die Berücksichtigung der zeitlichen Veränderung eines überwachten Parameters kann beispielsweise durch einen separaten Sensor erfolgen, der ausschließlich die Veränderung der überwachten Größe erfaßt. Eine andere Möglichkeit besteht darin, die Zeitpunkte, zu denen bestimmte Grenzwerte über- oder unterschritten werden, zu erfassen und anhand dieser auf das zeitliche Verhalten zu schließen.

Neben der Temperatur kann erfindungsgemäß auch eine Reihe andere Meßgrößen überwacht werden. Das entsprechende Reaktionsmuster hängt dabei nicht nur von der Meßgröße selbst, sondern auch von dem jeweiligen Meßort ab. Eine Reihe von möglichen Reaktionsmustern ist in der folgenden Tabelle aufgeführt. Dabei bezeichnet GW einen Grenzwert für einen zu überwachenden Parameter, bei dessen Überschreiten das entsprechende Element stillgelegt wird, beziehungsweise in einen Sleep-Modus versetzt wird. Das Definieren eines einzigen Grenzwertes ist in solchen Fällen sinnvoll, bei denen die entsprechende Komponente entweder voll in Betrieb sein sollte oder gar nicht. In anderen Fällen werden vorzugsweise mehrere Grenzwerte definiert, ein unterer, ein mittlerer und ein oberer Grenzwert, um in abgestufter Weise reagieren zu können.

**Tabelle: Reaktionsmuster**

| **Meßgröße** | **Meßort** | **Reaktionsmuster** |
|---|---|---|
| Temperatur | a) am Bauelement bzw. Baukomponente | a) GW: Stillegung des Bauelements bzw. der Baukomponente (Sleepmodus) |
| | b) am Luftansaugkanal | b) uGW: Systemleistung drosseln |
| | c) außerhalb des Computergehäuses im Raum | mGW: Lüfter abschalten |
| | | oGW: System kontrolliert herunterfahren |
| | d) extern, z.B. benachbarte Räume, Feuermelder | c) wie b) |
| | | d) nach örtlicher Gegebenheit festzulegen |
| Luftfeuchtigkeit | a) am Bauelement bzw. Baukomponente | a) GW: Stillegung des Bauelements bzw. der Baukomponente (Sleepmodus) |
| | b) am Luftansaugkanal | b) uGW: Systemleistung drosseln |
| | c) außerhalb des Computergehäuses im Raum | mGW: Lüfter abschalten |
| | | oGW: System kontrolliert herunterfahren |
| | | c) wie b) |
| Erschütterungen (Beschleunigung/ Frequenz) | a) am Bauelement bzw. Baukomponente | a) GW: Stillegung des Bauelements bzw. der Baukomponente (Sleepmodus) |
| | b) außerhalb des Computergehäuses im Raum | b) uGW: rotierende Devices (z.B. Plattenlaufwerke stillegen |
| | | oGW: System kontrolliert herunterfahren) |
| Luftdurchsatz | a) am Bauelement bzw. Baukomponente | a) GW: Stillegung des Bauelements bzw. der Baukomponente (Sleepmodus) |
| | b) am Luftauslaßkanal | b) uGW: Systemleistung drosseln |
| | | oGW: System kontrolliert herunterfahren |
| Staub, Rauch, Aerosole (z.B. optoelektronische Messung) | a) am Lufteinlaßkanal | a) uGW: Systemleistung drosseln |
| | b) außerhalb des Computergehäuses im Raum | mGW: Lüfter stilllegen |
| | | oGW: System kontrolliert herunterfahren |
| | | b) wie a) |
| Chemische Verunreinigung der Luft (z.B. elektrische Leitfähigkeit der Luft, ph-Wert) | a) am Bauelement bzw. Baukomponente | a) GW: Stillegung des Bauelements bzw. der Baukomponente (Sleepmodus) |
| | b) am Lufteinlaßkanal | b) uGW: Systemleistung drosseln |
| | c) außerhalb des Computergehäuses im Raum | mGW: Lüfter abschalten |
| | | oGW: System kontrolliert herunterfahren |
| | | c) wie b) |
| Elektromagnetische Feldstärke | a) am Bauelement bzw. Baukomponente | a) GW: Stillegung des Bauelements bzw. der Baukomponente (Sleepmodus) |
| | b) außerhalb des Computergehäuses im Raum | b) uGW: Systemleistung drosseln |
| | | oGW: System kontrolliert herunterfahren |
| Neztspammngsschwankungen | a) am Bauelement bzw. Baukomponente | a) GW: Stillegung des Bauelements bzw. der Baukomponente (Sleepmodus) |
| | b) Netzspannung vor Stromversorgungseinheit | b) (sofern keine USV vorgeschaltet) |
| | | uGW: Systemleistung drosseln |
| | | oGW: System kontrolliert herunterfahren |
| Helligkeitsschwankungen | a) am Bauelement bzw. Baukomponente | a) (relevant bei optoelektronischen Bauelementen) |
| | | GW: Stillegung des Bauelements bzw. der Baukomponente (Sleepmodus) |
| ionisierende Strahlung (Röntgen- bzw. radioaktive Strahlung) | a) am Bauelement bzw. Baukomponente | a) GW: Stillegung des Bauelements bzw. der Baukomponente (Sleepmodus) |
| | b) außerhalb Gehäuse im Raum | b) uGW: Systemleistung drosseln |
| | | oGW: System kontrolliert herunterfallen |

| | | |
|---|---|---|
| GW: Grenzwert- GW: unterer Grenzwert - mGW: mittlerer Grenzwert - oGW: oberer Grenzwert | | |

Dabei ist eine Temperaturüberwachung nicht nur an den einzelnen Bauelementen selbst, sondern beispielsweise auch an einem Luftansaugkanal des Systems, außerhalb des Systems im Raum bzw. in benachbarten Räumen möglich. Eine Veränderung der Temperatur am Luftansaugkanal kann beispielsweise in einer Veränderung des Verhaltens des Lüfters enden, wie dies in der Tabelle dargestellt ist.

Ein weiterer für das Betriebsverhalten wesentlicher Parameter ist die Luftfeuchtigkeit, die wiederum am Bauelement selbst aber auch am Luftansaugkanal oder außerhalb im Raum erfaßt werden kann. Auch hier kann beispielsweise eine erhöhte Luftfeuchtigkeit am Luftansaugkanal dazu führen, daß zunächst die Systemleistung gedrosselt wird oder der Lüfter abgeschaltet wird. Erst bei Überschreiten des oberen Grenzwertes ist das System aus Sicherheitsgründen kontrolliert herunterzufahren.

Auch innerhalb oder außerhalb des Systems auftretende Erschütterungen können überwacht werden und infolge dessen beispielsweise rotierende Elemente, z. B. Festplattenlaufwerk, stillgelegt werden, falls dies vertretbar ist. Werden hingegen die Erschütterung zu groß, ist auch hier ein kontrolliertes Herunterfahren des Systems notwendig. Weitere zu überwachende Parameter können der Luftdurchsatz, der Gehalt an Staub, Rauch oder Aerosolen sowie die chemische Verunreinigung der Luft sein. Wiederum kann eine einfache Maßnahme darin bestehen, daß der Lüfter zunächst stillgelegt wird. Führt dies nicht zu einem Erfolg und wird auch ein oberer Grenzwert überschritten, ist wiederum ein Herunterfahren des Systems die Folge.

Darüber hinaus können auch die elektromagnetische Feldstärke oder Schwankungen in der Netzversorgungsspannung überwacht werden. Kommen optoelektronische Bauelemente zum Einsatz, so können ferner auch Helligkeitsschwankungen berücksichtigt werden. Schließlich könnte auch, sofern dies notwendig ist, der Einfluß ionisierender Strahlung berücksichtigt werden, um Störfälle zu vermeiden.

Das erfindungsgemäße Verfahren zeichnet sich dadurch aus, daß es ein Höchstmaß an Flexibilität bietet und dabei gleichzeitig eine geeignete Reaktion auf Störfälle jeglicher Art ermöglicht. Dadurch ist die Möglichkeit gegeben, unter Beibehaltung größtmöglicher Leistungsfähigkeit das zu überwachende System am Laufen zu halten.

## Patentansprüche

1. Verfahren zur automatisierten Überwachung und Steuerung des Betriebsverhaltens eines Prozessorsystems (1) mit folgenden Schritten:
a) Erfassen von Betriebsparametern einzelner Komponenten oder/und von Umgebungsparametern des Prozessorsystems (1);
b-c) Vergleichen der erfassten Betriebsparameter bzw. Umgebungsparameter mit vorgegebenen Grenzwerten zur Feststellung, ob bzw. welche der vorgegebenen Grenzwerte durch einen oder mehrere der erfassten Betriebsparameter bzw. Umgebungsparameter über- oder unterschritten werden;
d) Bestimmen eines Betriebsereignisses auf Grundlage der über- oder unterschrittenen Grenzwerte, wobei auf Grundlage einer kombinierten Bewertung mehrerer Grenzwert-Über- bzw. Unterschreitungen als Betriebsereignis ein solches Ereignis bestimmt wird, das für diese verantwortlich ist;
e) Auswahl eines dem bestimmten Betriebsereignis entsprechenden Reaktionsmusters aus einer Anzahl von vorgegebenen Reaktionsmustern, wobei in Abhängigkeit vom Betriebsereignis ein den Betrieb des Systems aufrechterhaltendes Reaktionsmuster ausgewählt wird, wenn ein solches in Bezug auf das bestimmte Betriebsereignis existiert; und
f) Übertragen eines dem ausgewählten Reaktionsmuster entsprechenden Steuerbefehls zur Veränderung des Betriebsverhaltens an das zu überwachende Prozessorsystem (1).

2. Verfahren nach Anspruch 1,
**dadurch gekennzeichnet,**
**daß** es sich bei den erfaßten Betriebsparametern oder Umgebungsparametern um absolute Meßgrößen sowie um die zeitliche Veränderung dieser Meßgröße handelt.

3. Verfahren nach einem der vorherigen Ansprüche,
**dadurch gekennzeichnet,**
**daß** neben der Übertragung des der ausgewählten Reaktion entsprechenden Steuerbefehls auch eine entsprechendes Informationssignal übertragen wird.

4. Vorrichtung zur automatisierten Überwachung und Steuerung des Betriebsverhaltens eines Prozessorsystems (1), aufweisend:
A) erste Sensoren (3) zum Erfassen von Betriebsparametern einzelner Komponenten des Prozessorsystems (1) oder/und zweite Sensoren (5) zum Erfassen von Umgebungsparametern des Prozessorsystems (1);
B-C) eine Überwachungseinheit (7) zum Vergleichen der erfassten Betriebs- bzw. Umgebungsparameter mit in einem ersten Speicher (8) gespeicherten Grenzwerten, um festzustellen, ob bzw. welche der Grenzwerte durch einen oder mehrere der erfassten Betriebsparameter bzw. Umgebungsparameter über- oder unterschritten werden;
D) Mittel zum Bestimmen eines Betriebsereignisses und zum Erzeugen einer dieses kennzeichnenden Betriebsereignis-Meldung auf Grundlage des Über- oder Unterschreitens der Grenzwerte, wobei die Mittel dafür ausgelegt sind, auf Grundlage einer kombinierten Bewertung mehrerer Grenzwert-Über- bzw. Unterschreitungen als Betriebsereignis ein solches Ereignis zu bestimmen, das für diese verantwortlich ist; und
E-F) eine Steuereinheit (9) zum Empfangen der Betriebsereignis-Meldung sowie zur Auswahl eines der empfangenden Meldung entsprechenden Reaktionsmusters aus einer in einem zweiten Speicher (10) enthaltenen Anzahl von Reaktionsmustern und Übertragung eines dem ausgewählten Reaktionsmuster entsprechenden Steuerbefehls an das Prozessorsystem (1), wobei die Steuereinheit dafür ausgelegt ist, in Abhängigkeit von der empfangenen Meldung ein den Betrieb des Systems aufrechterhaltendes Reaktionsmuster auszuwählen, wenn ein solches in Bezug auf das bestimmte Betriebsereignis existiert.

5. Vorrichtung nach Anspruch 4
**dadurch gekennzeichnet,**
**daß** es sich bei den erfaßten Betriebsparametern oder Umgebungsparametern um absolute Meßgrößen sowie um die zeitliche Veränderung dieser Meßgröße handelt.

6. Vorrichtung nach Anspruch 4 oder 5,
**dadurch gekennzeichnet,**
**daß** diese ferner eine optische oder akustische Ausgabevorrichtung zur Ausgabe einer der Betriebsereignis-Meldung und/oder dem übermittelten Steuerbefehl entsprechenden Nachricht aufweist.

7. Vorrichtung nach einem der Ansprüche 4 bis 6,
**dadurch gekennzeichnet,**
**daß** diese eine Sendevorrichtung (15) zur Übermittlung einer der Betriebsereignis-Meldung und/oder dem übermittelten Steuerbefehl entsprechenden Nachricht aufweist.

8. Vorrichtung nach einem der Ansprüche 4 bis 7,
**dadurch gekennzeichnet,**
**daß** diese Bestandteil eines von dem zu überwachenden Prozessorsystem (1) separaten Computers ist.

## Claims

1. A method for the automated monitoring and control of the operating behaviour of a processor system (1) comprising the following steps:
a) Detecting operational parameters of single components or/and of environmental parameters of the processor system (1);
b-c) Comparing the detected operational parameters and environmental parameters respectively with predetermined limit values for determining if or which of the predetermined limit values are overrun or underrun by the one or several detected operational or environmental parameters;
d) Determining an operational event on the basis of the overrun or underrun limit values, as operational event such an event being determined on the basis of a combined assessment of several overruns or underruns of limit values which causes these limit violations;
e) Selecting a reaction pattern corresponding to the determined operational event from a number of predetermined reaction patterns, whereby, depending on the operational event, a reaction pattern is selected that will maintain the system's operation, if such a pattern exists in relation to the determined operational event; and
f) Transferring a control command to the processor system (1) being monitored which corresponds to the selected reaction pattern for changing the operational behaviour.

2. The method according to claim 1,
**characterized by**
the detected operational or environmental parameters being absolute measurements and the change over time of this measurement.

3. The method according to one of the preceding claims,
**characterized in that** besides the transmission of the control command which corresponds to the selected reaction a corresponding information signal is transferred .

4. Device for the automated monitoring and control of the operational behaviour of a processor system (1) comprising:
A) First sensors (3) for detecting operational parameters of single components of the processor system (1) or/and second sensors (5) for detecting environmental parameters of the processor system (1);
B-C) A monitoring unit (7) for comparing the detected operational and environmental parameters respectively with limit values saved in a first memory (8) for determining if or which of the predetermined limit values are overrun or underrun by the one or several detected operational or environmental parameters;
D) Means for determining an operational event and for producing an operational event message characterizing this operational event on the basis of overruns or underruns of the limit values, the means being adapted for determining on the basis of a combined assessment of several overruns or underruns of limit values as operational event such an event which causes said limit violations; and
E-F) A control unit (9) for receiving the operational event message as well as for selecting a reaction pattern corresponding to the received message from a number of reaction patterns contained in a second memory (10) and transferring a control command corresponding to the selected reaction pattern to the processor system (1), the control unit being adapted for selecting, depending of the received message, a reaction pattern which will maintain the operation of the system if such a pattern exists in relation to the determined operational event.

5. A device according to claim 4,
**characterized by**
the detected operational or environmental parameters being absolute measurements and the change over time of this measurement.

6. A device according to claim 4 or 5,
**characterized by**
the device further comprising an optical or acoustical emission system for emitting a message corresponding to the operational event message and/or the transferred control command.

7. A device according to claim 4 to 6,
**characterized by**
the device comprising a transmission device (15) for transferring a message corresponding to the operational event message and/or the transferred control command.

8. A device according to claim 4 to 7,
**characterized by**
the device being part of a computer which is separate from the processor system (1) to be monitored.

## Revendications

1. Une méthode pour la surveillance et le contrôle automatique du comportement opérationnel d'un système de processeur (1), comprenant les démarches suivantes:
a) Saisir les paramètres opérationnels de composantes individuelles ou/et de paramètres d'environnement du système de processeur (1);
b-c) Comparer les paramètres opérationnels ou d'environnement saisis avec des valeurs limites définies pour déterminer si ou lesquelles des valeurs limites définies ne sont pas atteintes ou sont dépassées par un ou plusieurs des paramètres opérationnels ou d'environnement saisis;
d) Déterminer un évènement opérationnel sur la base des valeurs limites dépassées ou qui ne sont pas atteintes, un évènement opérationnel étant déterminé sur la base d'une évaluation combinée de plusieurs valeurs limites dépassées ou ne pas atteintes en tant qu'un évènement qui est responsable pour ces violations;
e) Sélectionner un schéma de réaction correspondant à l'évènement opérationnel spécifique parmi un nombre de schémas de réaction prédéterminés, un schéma de réaction étant sélectionné en fonction de l'évènement opérationnel préservant l'opération du système, si un tel schéma existe pour l'évènement opérationnel en question; et
f) Transmettre une commande de contrôle correspondant au schéma de réaction sélectionnés pour modifier le comportement opérationnel au système de processeur (1) à surveiller.

2. La méthode selon la revendication 1,
**caractérisée par**
les paramètres opérationnels ou d'environnement saisis étant des mesures absolues et le changement temporel de cette mesure.

3. La méthode selon une des revendications précédentes,
**caractérisée par**,
en plus de la transmission de la commande de contrôle correspondant à la réaction sélectionnée un signal d'information correspondant étant transmis.

4. Dispositif pour la surveillance automatisée et le contrôle du comportement opérationnel d'un système de processeur (1), comprenant:
A) Des premiers capteurs (3) pour saisir des paramètres opérationnels de composantes individuelles du système de processeur (1) ou/et des deuxièmes capteurs (5) pour saisir des paramètres d'environnement du système de processeur (1);
B-C) Une unité de surveillance (7) pour comparer les paramètres opérationnels ou d'environnement avec des valeurs limites enregistrées dans un premier mémoire (8) pour déterminer si ou lesquelles des valeurs limites sont dépassées ou ne pas atteintes par un ou plusieurs des paramètres opérationnels ou d'environnement;
D) Des moyens pour déterminer un évènement opérationnel et pour produire un message évènement opérationnel caractérisant cet évènement opérationnel sur la base du dépassement ou de l'infériorité aux valeurs limites, les moyens étant adaptés pour déterminer sur la base d'une évaluation combinée de plusieurs dépassements ou infériorités aux valeurs limites comme évènement opérationnel un évènement qui en est responsable; et
E-F) Une unité de contrôle (9) pour recevoir le message évènement opérationnel ainsi que pour sélectionner un schéma de réaction correspondant au message reçu parmi un nombre de schémas de réaction contenus dans un deuxième mémoire (10) et pour transmettre une commande de contrôle correspondant au schéma de réaction sélectionné au système de processeur (1), l'unité de contrôle étant adaptée pour sélectionner un schéma en fonction de l'évènement opérationnel préservant l'opération du système, si un tel schéma existe pour l'évènement opérationnel en question.

5. Un dispositif selon la révendication 4,
**caractérisé par**
les paramètres opérationnels ou d'environnement saisis étant des mesures absolues et le changement temporel de cette mesure.

6. Un dispositif selon la révendication 4 ou 5,
**caractérisé par**
ce dernier comprenant de plus un dispositif d'émission optique ou accoustique pour émettre un message évènement opérationnel et/ou un message correspondant à la commande de contrôle transmise.

7. Un dispositif selon la révendication 4 à 6,
**caractérisé par**
ce dernier comprenant un dispositif de transmission (15) pour transmettre un message correspondant au message évènement opérationnel et/ou à la commande de contrôle transmise.

8. Un dispositif selon la révendication 4 à 7,
**caractérisé par**
ce dernier faisant partie d'un ordinateur séparé du système de processeur (1) à surveiller.
